# EUROPÄISCHE PATENTSCHRIFT

(11) **EP 0 834 487 B1**
(45) Veröffentlichungstag und Bekanntmachung des Hinweises auf die Patenterteilung: **19.09.2001**
(21) Anmeldenummer: 96115962.1
(22) Anmeldetag: 04.10.1996
(51) Int. Cl.: C04B 37/00, G01L 9/00

(54) **Verfahren zum Verbinden von Aluminiumoxid-Keramik-Körpern**
Method for joining ceramic alumina solids
Procédé pour joindre des membres d'oxyde d'aluminium

(43) Veröffentlichungstag der Anmeldung: 08.04.1998
(73) Patentinhaber: Endress + Hauser GmbH + Co., 79689 Maulburg (DE)
(72) Erfinder: Hegner, Frank Dr., 79540 Lörrach (DE); Schmidt, Elke Maria, Dipl.-Ing., 79650 Schopfheim (DE); Rossberg, Andreas Dipl.-Chem., 79713 Bad Säckingen (DE); Voigtsberger, Bärbel Dr., 07639 Bad Klosterlausnitz (DE); Voigt, Ingolf Dr., 07749 Jena (DE); Ludwig, Henry, 07549 Gera (DE)
(74) Vertreter: Morstadt, Volker, Dipl.-Ing.

(56) Entgegenhaltungen:
- DE-A- 2 709 945
- US-A- 4 780 161

## Beschreibung

Die Erfindung betrifft ein Verfahren zum Herstellen einer langzeit-vakuumdichten, korrosionsbeständigen und hochfesten Verbindung zwischen einem ersten und einem zweiten Körper, die jeweils aus gesinterter Aluminiumoxid-Keramik oder Saphir bestehen.

Technisch verwendete Aluminiumoxid-Keramik enthält üblicherweise mehr als etwa 92 Gew.% Aluminiumoxid sowie weniger als etwa 8 Gew.% eines Sinterhilfsmittels, wie z.B. Siliciumdioxid, Titandioxid, Magnesiumoxid oder Calciumoxid. Meist wird eine 96%ige Aluminiumoxid-Keramik verwendet, die somit einen Sinterhilfsmittel-Anteil von 4 Gew.% hat und deren Sinter-Temperatur ca. 1.500 °C beträgt.

In Sonderfällen kann die Aluminiumoxid-Keramik auch besondersrein sein (99,5 Gew.% Aluminiumoxid), d.h. es ist in der Keramik nur ein äußerst geringer Anteil an Sinterhilfsmittel vorhanden; die Sinter-Temperatur beträgt hier ca. 1.600 °C.

Ein besonderes Anwendungsgebiet dieser Aluminiumoxid-Keramiken sind keramische Drucksensoren. Diese umfassen bekanntlich einen keramische Grundkörper und eine keramische Membran, die in der Nähe ihres Randes mit dem Grundkörper unter Bildung einer Innenkammer verbunden ist.

In der US-A 41 77 496 wird als Material zu diesem Verbinden der bereits gesinterten Aluminiumoxid-Keramik-Körper eine Glasfritte oder keramisches Einschmelzmaterial beschrieben und in der US-A 50 05 421 oder in der US-A 53 34 344 ein Aktivhartlot.

Beide Materialien sind wegen der mehr oder weniger nicht übereinstimmenden thermischen Ausdehnungskoeffizienten von Glasfritte bzw. von Aktivhartlot und Aluminiumoxid-Keramik problematisch, insb. wenn über einen weiten Temperaturbereich eine möglichst gute Übereinstimmung erforderlich ist. Es lassen sich zwar Aktivhartlot-Legierungen finden, bei denen diese Übereinstimmung zufriedenstellend erscheint vgl. die ältere, nicht vorveröffentlichte EP-A-835716-(Anmeldung 96 11 1987. 2), der Wunsch nach einer möglichst identischen Übereinstimmung der thermischen Ausdehnungskoeffizienten von Aluminiumoxid-Keramik und Verbindungmaterial besteht aber nach wie vor.

Die Erfinder haben daher der Lösung dieses Problems als ersten Gedanken zugrundegelegt, nicht mehr eine Glasfritte oder ein Aktivhartlot zu verwenden, sondern zu versuchen, als Verbindungsmaterial Aluminiumoxid selbst zu verwenden, da sich damit per se eine Identität der thermischen Ausdehnungskoeffizienten von Aluminiumoxid-Keramik und Verbindungmaterial ergibt.

Während noch nicht gesinterte Aluminiumoxid-Körper, also sogenannte Grünkorper, ohne weiteres und ohne Verbindungsmittel während des Sinterns sich miteinander verbinden, stößt die Realisierung der Verbindung von bereits gesinterten Aluminiumoxid-Körpern mittels hochreinem Aluminiumoxid selbst aber auf erhebliche praktische Schwierigkeiten und, daraus abgeleitet, auch auf theoretische Bedenken, wenn nicht sogar Vorurteile. Unter hochrein wird im übrigen hier und im folgenden eine Reinheit von mindestens 99,9 Gew.% verstanden.

Diese Bedenken beruhen z.B. schon darauf, daß sich ein bereits gesinterter hochreiner Aluminiumoxid-Keramik-Körper mit einem hochreinen Aluminiumoxid-Grünkörper bekanntlich nicht zusammnensintern läßt, denn der Grünkörper schwindet isotrop um ca. 50%.

US-A- 4 780 161 beschreibt das Verbinden von Aluminiumoxidkeramikrohren durch Beschichten der kontaktflächen mit einer feinkörniges Aluminiumoxid enthaltenden Paste und Erhitzen auf 1600°C oder 1700°C unter mechanischen Druck.

Die Erfinder haben trotzdem nach Wegen gesucht, wie sich gesinterte Aluminiumoxid-Keramik mittels Aluminiumoxid bei Temperaturen weit unterhalb der Sinter-Temperatur verbinden läßt. Die Verbindungsstelle, die sogenannte Fügestelle muß im übrigen, insb. wenn sie Teil eines keramischen Drucksensors sein soll, langzeit-vakuumdicht, hochfest und korrosionsbeständig sein.

Zur Lösung dieser Problemstellung besteht die Erfindung in einem Verfahren zum Herstellen einer langzeitvakuumdichten, hochfesten und korrosionsbeständigen Verbindung zwischen einem ersten und einem zweiten Körper mittels eines Fügematerials, die jeweils aus gesinterter, polykristalliner Aluminiumoxid-Keramik einer Reinheit größer 92 Gew.% oder aus Saphir bestehen, mit folgenden Schritten:
- zwischen dem ersten und dem zweiten Körper wird das Fügematerial in Form einer Paste, einer Folie oder eines Schlickers angeordnet,
- wobei das Fügematerial zuvor entweder hergestellt wurde
   -- aus einem agglommerat-freien, hochdispersen, nanoskaligen, hochreinen α-Aluminiumoxid-Pulver mit Partikeln mit möglichst hohem Kalzinationsgrad und mit einer Korngröße von höchstens 100 nm (= 10⁻⁷ m),
   -- aus einem anorganischen oxydischen Pulver eines Sinterhilfsmittels mit Partikeln von etwa der gleichen Korngröße wie die des α-Aluminiumoxid-Pulvers und
   -- aus einem organischen Vehikel, das in einem organischen oder in einem wäßrigen Lösungsmittel gelöst bzw. suspendiert ist und in dem die Partikel des jeweiligen Pulvers möglichst gleichverteilt sind,
- oder wobei das Fügematerial zuvor hergestellt wurde
   -- aus einem agglomerat-freien, hochdispersen, nanoskaligen, hochreinen α-Aluminiumoxid-Pulver mit Partikeln von möglichst hohem Kalzinationsgrad sowie mit einer Korngröße von höchstens 100 nm (= 10⁻⁷ m),
   -- aus einem anorganischen oxydischen Sinterhilfsmittel, das auf chemischem Wege als Umhüllung der Partikel des α-Aluminiumoxid-Pulvers oder als Anlagerung an diese hergestellt wurde, und
   -- aus einem organischen Vehikel, das in einem organischen oder in einem wäßrigen Lösungsmittel gelöst bzw. suspendiert ist,
      --- wobei der gemeinsame Anteil an α-Aluminiumoxid und an Sinterhilfsmittel in der Paste, in der Folie oder im Schlicker zwischen 50 % und 70 % liegt, und
- die Körper werden auf eine Temperatur von höchstens 1.300 °C erhitzt und danach abkühlen gelassen,
   -- wobei nach dem Abkühlen der Anteil des Aluminiumoxids mindestens 95 Gew.% und der Anteil des Sinterhilfsmittels höchstens 5 Gew.% beträgt.

Nach einer bevorzugten Ausgestaltung der Erfindung beträgt der anorganische Anteil in der Paste, in der Folie oder im Schlicker mindestens 99,9 Gew.% α-Aluminiumoxid.

Nach einer Weiterbildung der Erfindung bzw. dieser Ausgestaltung der Erfindung wirkt zusätzlich zur Temperatur ein Druck auf die Körper ein.

Eine bevorzugte Verwendung des Verfahrens der Erfindung dient zur Herstellung eines keramischen, insb. kapazitiven Absolutdruck- oder Differenzdruck-Sensors, bei dem der erste Körper dessen Grundkörper und der zweite Körper dessen Membran ist, die in der Nähe ihres Randes mit dem Grundkörper unter Bildung einer Innenkammer langzeitvakuumdicht, hochfest und korrosionsbeständig verbunden wird.

Die Erfindung besteht schließlich auch in einem kapazitiven Absolutdruck-Sensor oder in einem kapazitiven Differenzdruck-Sensors mit einem aus Aluminiumoxid-Keramik bestehenden Grundkörper und einer aus Aluminiumoxid-Keramik bestehenden Membran, die in der Nähe ihres Randes mit dem Grundkörper mittels einer Verbindungsschicht aus Aluminiumoxid-Keramik unter Bildung einer Innenkammer langzeit-vakuumdicht, hochfest und korrosionsbeständig mechanisch verbunden ist, wobei die einander zugewandten Flächen von Grundkörper und Membran jeweils mit mindestens einer Elektrode versehen sind.

Ein Hauptvorteil der Erfindung besteht darin, daß, wie die mikroskopische Untersuchung von Schliffbildern der Fügestelle zeigen, der eine Körper mit dem anderen ohne jede Phasengrenze verbunden ist, die bei Glasfritte oder bei Aktivhartlot selbstverständlich vorhanden ist. Die Körper sind vielmehr übergangslos und grenzflächenfrei monolithisch miteinander verbunden, und die Fügestelle besteht somit wie die Körper aus Aluminiumoxid-Keramik.

Somit hat die Fügestelle dieselben Eigenschaften wie die Körper, d.h. sie ist genauso langzeit-vakuumdicht, mechanisch hochfest und korrosionsbeständig wie die Aluminiumoxid-Keramik selbst - eine aus Glasfritte erzeugte Verbindung ist demgegenüber mechanisch wesentlich weniger belastbar. Hinzu kommt, daß während des Erhitzens lediglich eine Temperatur erforderlich ist, die weit unterhalb der eingangs erwähnten Sinter-Temperatur der Grünkörper liegt.

Weitere Vorteile der Erfindung ergeben sich aus deren ausführlicher Erläuterung, die nun folgt; eine Zeichnung ist hierzu nicht erforderlich.

Als Grundmaterial eines Fügematerials für die Verbindung eines ersten und eines zweiten Körpers aus gesinterter, polykristalliner Aluminiumoxid-Keramik mit der eingangs erwähnten Reinheit wird α-Aluminiumoxid benutzt. Reines α-Aluminiumoxid hat einen Schmelzpunkt von ca. 2.100 °C. Es wird aus Aluminiumhydroxid (Al-O-OH, Bauxit) durch Erhitzen auf eine Temperatur von ca. 1.100 °C, das sogenannte Kalzinieren, erzeugt und bleibt nach Abkühlen auf Umgebungstemperatur beständig, so daß es zu Pulvern, z.B. durch Mahlen, weiterverarbeitbar ist.

Das Sintern von 96 %igen Aluminiumoxid-Grünkörpern zu Aluminiumoxid-Keramik-Körpern erfolgt üblicherweise bei ca. 1.500 °C, das von 99,5 %igen bei ca. 1.600 °C. Das in der gesinterten Keramik enthaltene Aluminiumoxid ist somit praktisch vollständig α-Aluminiumoxid.

Das α-Aluminiumoxid-Pulver mit den erwähnten Eigenschaften wird dann zu einem Fügematerial in Form einer Paste, einer Folie oder eines Schlickers verarbeitet. Ein Schlicker enthält u.a. Wasser und ist in eine Form, z.B. aus Gips, gießbar, die dem Schlicker das Wasser isotrop entzieht, so daß aus dem Schlicker ein formbeständiger Fügematerial-Körper entsteht. Demgegenüber ist eine Paste thixotrop so daß aus ihr, z.B. mittels eines Siebdruck-Verfahrens, ebenfalls formbeständige Fügematerial-Körper direkt auf mindestens einen der zu verbindenden Körper aufgebracht werden können.

Zur Herstellung des Fügematerials sind zwei Varianten möglich. Nach der ersten Variante wird es aus dem erwähnten α-Aluminiumoxid-Pulver, aus einem anorganischen oxydischen Pulver eines Sinterhilfsmittels, wie z.B. Siliciumdioxid, Titandioxid, Magnesiumoxid oder Calciumoxid, und aus einem organischen Vehikel als Paste, Folie oder Schlicker hergestellt. Die Partikel des Sinterhilfsmittels haben dabei etwa die gleiche Korngröße wie die Partikel des α-Aluminiumoxid-Pulvers.

Das Vehikel - dieser Begriff ist von der Herstellung von Dickschicht-Lot-Pasten her geläufig, vgl. z.B. die EP-A 619 161 - enthält z.B. ein Lösungsmittel,einen Dispergator, wie z.B. Fischöl, einen Binder, wie z.B. Polyvinylbutyral, einen Plastifizierer, wie z.B. Polyethylenglycol, und gegebenenfalls geeignete weitere Stoffe. Das Vehikel ist seinerseits in einem organischen oder in einem wäßrigen Lösungsmittel, wie z.B. ein Alkohol, gelöst bzw. suspendiert, in dem die Partikel des jeweiligen Pulvers möglichst gleichverteilt sind.

Nach der zweiten Variante wird das Fügematerial aus dem erwähnten α-Aluminiumoxid-Pulver, aus dem anorganischen oxydischen Sinterhilfsmittel, das chemisch, z.B. mittels des sogenannten Sol-Gel-Prozesses, als Umhüllung der Partikel des α-Aluminiumoxid-Pulvers oder als Anlagerung an diese erzeugt wurde, und aus dem gleichen organischen Vehikel wie bei der ersten Variante hergestellt. Bei beiden Varianten liegt der gemeinsame Anteil an α-Aluminiumoxid und an Sinterhilfsmittel in der Paste, in der Folie oder im Schlicker zwischen 50 % und 70 %.

Nun wird zwischen den beiden Körper eine erforderliche und ausreichende Menge an Fügematerial angeordnet. Daraufhin werden die beiden Körper auf eine Temperatur von höchstens 1.300 °C erhitzt und danach abkühlen gelassen.

Nach dem Abkühlen beträgt der Anteil des Aluminiumoxids mindestens 95 Gew.% und der Anteil des Sinterhilfsmittels höchstens 5 Gew.%. Dies ist darauf zurückzuführen, daß sämtliche Bestandteile des Vehikels zu Kohlendioxid verbrennen bzw. verdampfen und aus der Fügestelle entweichen.

Der anorganische Anteil im Fügemittel kann bei der erwähnten ersten Variante ohne weiteres auf mehr als 99,9 Gew.% α-Aluminiumoxid erhöht werden, so daß praktisch kein Sinterhilfsmittel mehr verwendet wird. Da der Anteil an Sinterhilfsmittel im Fügematerial die für das Verbinden der beiden Körper erforderliche Temperatur im Vergleich zum im vorigen Absatz erwähnten Fall absenkt, sind für ein Fügemittel mit z.B. 95 Gew.% α-Aluminiumoxid und 5 Gew.% Sinterhilfsmittel in der fertigen Fügestelle nur etwa 1.100 °C bis 1.200 °C erforderlich.

Der gemeinsame Anteil an α-Aluminiumoxid und an Sinterhilfsmittel im Fügematerial von 50 % bis 70 % läßt eigentlich erwarten, daß während des Erhitzens und des Abkühlens ein unzulässiger Schwund des Fügematerials auftritt. Dies umso mehr, als mit der von der Erfindung für das Fügematerial vorgesehenen Zusammensetzung bisher lediglich Mikrofilter, also poröse Körper, und somit gerade keine vakuumdichten Körper hoher mechanischer Festigkeit herstellbar waren.

Es zeigte sich jedoch, daß es nicht zu einem isotropen, sondern lediglich zu einem anisotropen, nämlich uniaxialen, Schwund in Richtung der Senkrechten auf die beiden zu verbindenden Flächen der Körper kommt, dagegen nicht zu einem höchst unerwünschten lateralen Schwund parallel zu diesen Flächen. Offensichtlich kommt es zu einer Umlagerung von Partikeln während des Erhitzens.

Zur Vermeidung dieses lateralen Schwundes kann es auch vorteilhaft sein, auf die beiden Körper während des Erhitzens einen Druck auszuüben, der bis zu 10 MPa (= 100 bar) betragen kann. Durch eine derartige Druckeinwirkung lassen sich zudem die Dichte der Fügestelle erhöhen, die Erhitzungstemperatur erniedrigen und die Herstellzeit verkürzen.

Im Falle von hochreinem α-Aluminiumoxid-Pulver mit Partikeln einer Korngröße kleiner 100 nm (= 10⁻⁷ m) stellt sich bei der Erhitzungstemperatur in der Fügestelle eine nicht zu erwartende viskose Phase ein, so daß in den Körpern etwa auftretende oder vorhandene Spalte, die im Sub-Mikrometer- oder Mikrometer-Bereich liegen, geschlossen werden.

Es war somit für die Erfinder völlig überraschend und dürfte somit die Überwindung eines Vorurteils der Fachwelt darstellen, daß mit den beschriebenen Fügematerialien das gesteckte Ziel der Erfindung höchst zufriedenstellend erreichbar ist.

Das Verfahren der Erfindung läßt sich bevorzugt bei der Herstellung eines keramischen, insb. kapazitiven, Absolutdruck-Sensors oder Differenzdruck-Sensors anwenden. In diesem Falle ist der erste Körper der Grundkörper und der zweite Körper die Membran des Drucksensors, die in der Nähe ihres Randes mit dem Grundkörper unter Bildung einer Innenkammer langzeit-vakuumdicht, hochfest und korrosionsbeständig verbunden wird.

Es läßt sich somit ein kapazitiver Absolutdruck-Sensor oder ein kapazitiver Differenzdruck-Sensors mit einem aus Aluminiumoxid-Keramik bestehenden Grundkörper und einer aus Aluminiumoxid-Keramik bestehenden Membran herstellen. Dabei ist die Membran in der Nähe ihres Randes mit dem Grundkörper mittels einer Verbindungsschicht, die ebenfalls nur aus Aluminiumoxid-Keramik besteht, mechanisch verbunden. Die einander zugewandten Flächen von Grundkörper und Membran sind jeweils mit mindestens einer Elektrode versehen, so daß ein auf die Membran einwirkender und sie durchbiegender Druck zu einer Änderung der zwischen den Elektroden bestehenden Kapazität führt. Diese Kapazitätsänderung kann in üblicher Weise gemessen werden.

## Patentansprüche

1. Verfahren zum Herstellen einer langzeit-vakuumdichten, hochfesten und korrosionsbeständigen Verbindung zwischen einem ersten und einem zweiten Körper mittels eines Fügematerials, die jeweils aus gesinterter, polykristalliner Aluminiumoxid-Keramik einer Reinheit größer 92 Gew.% oder aus Saphir bestehen, mit folgenden Schritten:
- zwischen dem ersten und dem zweiten Körper wird das Fügematerial in Form einer Paste, einer Folie oder eines Schlickers angeordnet,
- wobei das Fügematerial zuvor entweder hergestellt wurde
-- aus einem agglommerat-freien, hochdispersen, nanoskaligen, hochreinen α-Aluminiumoxid-Pulver mit Partikeln mit möglichst hohem Kalzinationsgrad und mit einer Korngröße von maximal 100 nm (= 10⁻⁷ m),
-- aus einem anorganischen oxydischen Pulver eines Sinterhilfsmittels mit Partikeln von etwa der gleichen Korngröße wie die des α-Aluminiumoxid-Pulvers und
-- aus einem organischen Vehikel, das in einem organischen oder in einem wäßrigen Lösungsmittel gelöst bzw. suspendiert ist und in dem die Partikel des jeweiligen Pulvers möglichst gleichverteilt sind,
- oder wobei das Fügematerial zuvor hergestellt wurde
-- aus einem agglommerat-freien, hochdispersen, nanoskaligen, hochreinen α-Aluminiumoxid-Pulver mit Partikeln von möglichst hohem Kalzinationsgrad sowie mit einer Korngröße von höchstens 100 nm (= 10⁻⁷ m),
-- aus einem anorganischen oxydischen Sinterhilfsmittel, das auf chemischem Wege als Umhüllung der Partikel des α-Aluminiumoxid-Pulvers oder als Anlagerung an diese hergestellt wurde, und
-- aus einem organischen Vehikel, das in einem organischen oder in einem wäßrigen Lösungsmittel gelöst bzw. suspendiert ist,
--- wobei der gemeinsame Anteil an α-Aluminiumoxid und an Sinterhilfsmittel in der Paste, in der Folie oder im Schlicker zwischen 50 % und 70 % liegt,
- und die Körper werden auf eine Temperatur von höchstens 1.300 °C erhitzt und danach abkühlen gelassen,
-- wobei nach dem Abkühlen der Anteil des Aluminiumoxids mindestens 95 Gew.% und der Anteil des Sinterhilfsmittels höchstens 5 Gew.% beträgt.

2. Verfahren nach Anspruch 1, bei dem der anorganische Anteil in der Paste, in der Folie oder im Schlicker mindestens 99,9 Gew.% α-Aluminiumoxid beträgt.

3. Verfahren nach Anspruch 1 oder 2, bei dem zusätzlich zur Temperatur ein Druck auf die Körper einwirkt.

4. Verwendung des Verfahrens nach einem der Ansprüche 1 bis 3 zur Herstellung eines keramischen, insb. kapazitiven, Absolutdruck-Sensors oder Differenzdruck-Sensors bei dem der erste Körper dessen Grundkörper und der zweite Körper dessen Membran ist, die in der Nähe ihres Randes mit dem Grundkörper unter Bildung einer Innenkammer langzeit-vakuumdicht, hochfest und korrosionsbeständig verbunden wird.

5. Kapazitiver Absolutdruck-Sensor oder kapazitiver Differenzdruck-Sensors mit einem aus Aluminiumoxid-Keramik bestehenden Grundkörper und einer aus Aluminiumoxid-Keramik bestehenden Membran, die in der Nähe ihres Randes mit dem Grundkörper mittels einer Verbindungsschicht aus Aluminiumoxid-Keramik unter Bildung einer Innenkammer langzeit-vakuumdicht, hochfest und korrosionsbeständig mechanisch verbunden ist, wobei die einander zugewandten Flächen von Grundkörper und Membran jeweils mit mindestens einer Elektrode versehen sind.

## Claims

1. A process for forming a long-time-vacuum-tight, highstrength, and corrosion-resistant joint, by means of a joining material, between a first body and a second body each made ot sintered, polycrystalline alumina ceramic with a purity greater than 92 wt.% or of sapphire, said process comprising steps of:
- interposing the joining material in the form of a paste, a foil, or a slip between the first body and the second body,
- the joining material having been made be from
-- an agglomerate-free, highly disperse, high-purity α-alumina powder with particles of as high a degree of calcination as possible and of a size not exceeding 100 nm (= 10⁻⁷ m),
-- an anorganic oxidic powder of an auxiliary sintering agent with particles of approximately the same size as the particle size of the α-alumina powder, and an organic vehicle which is dissolved or suspended in an organic or aqueous solvant and in which the particles of the respective powder are distributed as evenly as possible,
- or with the joining material having been made from
-- an agglomerate-free, highly disperse, high-purity α-alumina powder with particles of as high a degree of calcination as possible and of a size not exceeding 100 nm (= 10⁻⁷ m),
-- an anorganic oxidic auxiliary sintering agent produced chemically as envelopes around or attachment to the particles of the α-alumina powder, and
-- an organic vehicle dissolved or suspended in an organic or aqueous solvant,
--- with the total α-alumina and auxiliary-sintering-agent content of the paste, the foil, or the slip ranging between 50% and 70%; and
- heating the bodies to a temperature of not more than 1,300 °C and then allowing them to cool down,
-- with the alumina content after cooling being at least 95 wt.% and the auxiliary-sintering-agent content after cooling being at the highest 5 wt.%.

2. The process as claimed in claim 1 wherein the anorganic content of the paste, the foil, or the slip is at least 99.9 wt.% α-alumina.

3. The process as claimed in claim 1 or 2 wherein, in addition to the temperature, a pressure acts on the bodies.

4. A use of the process as claimed in anyone of claims 1 to 3 to produce a ceramic, particularly capacitive, absolute-pressure or differential-pressure sensor in which the first body is a substrate and the second body a diaphragm which is connected with the substrate near its edge so as to form a long-time-vacuum-tight, high-strength, corrosion-resistant joint and an internal chamber.

5. A capacitive absolute-pressure sensor or a capacitive differential-pressure sensor having a substrate of alumina ceramic and a diaphragm of alumina ceramic which is mechanically connected with the substrate near its edge by means of a joining layer of alumina ceramic so as to form a long-time-vacuum-tight, high-strength, corrosion-resistant joint and an internal chamber, the opposite surfaces of the substrate and the diaphragm being each provided with at least one electrode.

## Revendications

1. Procédé de réalisation d'un assemblage qui est, sur une longue durée, étanche au vide, très solide et résistant à la corrosion, entre un premier corps et un second corps, grâce à un matériau de jonction, ces corps se composant à chaque fois d'une céramique d'alumine polycristalline frittée d'une pureté supérieure à 92 % en poids ou se composant de saphir, le procédé comprenant les étapes suivantes :
- le matériau de jonction, sous la forme d'une pâte, d'une feuille ou d'une barbotine, est disposé entre le premier corps et le second corps,
- où le matériau de jonction a été réalisé auparavant
-- à partir d'une poudre d'alumine α très pure, d'une dimension en nanomètres, à forte dispersion, exempte d'agglomérat, comprenant des particules ayant un degré de calcination le plus élevé possible et ayant une granulométrie au maximum de 100 nm (= 10⁻⁷ m),
-- à partir d'une poudre d'oxyde anorganique d'un adjuvant de frittage comprenant des particules ayant sensiblement la même granulométrie que celle de la poudre d'alumine α, et
-- à partir d'un véhicule organique qui est dissous ou en suspension dans un solvant organique ou dans un solvant aqueux, véhicule dans lequel les particules de la poudre respective sont réparties de la façon la plus égale possible,
- ou bien où le matériau de jonction a été réalisé auparavant
-- à partir d'une poudre d'alumine α très pure, d'une dimension en nanomètres, à forte dispersion, exempte d'agglomérat, comprenant des particules ayant un degré de calcination le plus élevé possible ainsi qu'une granulométrie au maximum de 100 nm (= 10⁻⁷ m),
-- à partir d'un adjuvant de frittage d'oxyde anorganique qui a été fabriqué de façon chimique, servant d'enrobage des particules de la poudre d'alumine α ou comme fixation sur ces particules, et
-- à partir d'un véhicule organique qui est dissous ou en suspension dans un solvant organique ou dans un solvant aqueux,
--- où la part commune d'alumine α et d'adjuvant de frittage dans la pâte, dans la feuille ou dans la barbotine est comprise entre 50 % et 70 %, et
- où les corps sont chauffés à une température maximum de 1300°C, après quoi on les laisse refroidir,
-- où, après le refroidissement, la part d'alumine représente au moins 95 % en poids, la part de l'adjuvant de frittage représentant au maximum 5 % en poids.

2. Procédé selon la revendication 1, dans lequel la partie anorganique dans la pâte, dans la feuille ou dans la barbotine est au moins égale à 99,9 % en poids d'alumine α.

3. Procédé selon la revendication 1 ou 2, dans lequel une pression, en plus de la température, agit sur les corps.

4. Utilisation du procédé selon l'une quelconque des revendications 1 à 3, pour la fabrication d'un capteur céramique, notamment d'un capteur capacitif de pression absolue ou d'un capteur capacitif de pression différentielle, dans lequel le premier corps est le corps de base et dans lequel le second corps est une membrane qui, à proximité de son bord, est reliée au corps de base, en formant une chambre intérieure, par un assemblage qui est, sur une longue durée, étanche au vide, très solide et résistant à la corrosion.

5. Capteur capacitif de pression absolue ou capteur capacitif de pression différentielle comprenant un corps de base en céramique d'alumine et une membrane en céramique d'alumine qui, à proximité de son bord, est reliée mécaniquement au corps de base, à l'aide d'une couche de jonction en céramique d'alumine, en formant une chambre intérieure, par un assemblage qui est, sur une longue durée, étanche au vide, très solide et résistant à la corrosion, où les surfaces du corps de base et de la membrane, tournées l'une vers l'autre, sont dotées chacune au moins d'une électrode.
